# EUROPEAN PATENT SPECIFICATION

(11) **EP 3 626 589 B1**
(45) Date of publication and mention of the grant of the patent: **07.07.2021**
(21) Application number: 19197650.5
(22) Date of filing: 17.09.2019
(51) Int. Cl.: B62D 33/02, B62D 33/04

(54) **SIDE STANCHION FOR LOAD PLATFORMS OF VEHICLES**
SEITENSTREBE FÜR LASTPLATTFORMEN VON FAHRZEUGEN
POTEAU LATÉRAL POUR PLATEFORMES DE CHARGE DE VÉHICULES

(30) Priority: 19.09.2018 SE 1851114
(43) Date of publication of application: 25.03.2020
(73) Proprietor: Kinnegrip AB, 531 02 Lidköping (SE)
(72) Inventor: LINDSTRÖM, Stefan, 531 37 LIDKÖPING (SE)
(74) Representative: Zacco Sweden AB

(56) References cited:
- EP-A1- 3 284 624
- DE-B3-102006 004 994
- DE-U1-202011 052 306
- DE-U1-202016 000 463

## Description

### TECHNICAL FIELD

The present description relates to a side stanchion for load platforms of vehicles comprising a lower stanchion portion and an upper stanchion portion, wherein the lower stanchion portion and the upper stanchion portion have an extension in a first longitudinal direction of the side stanchion, and wherein the upper stanchion portion can interact with and be movable relative to the lower stanchion portion. The lower stanchion portion is arranged at a lower end to be detachably connected to a fastener of the vehicle, and the upper stanchion portion is arranged at an upper end to be connected to a roof profile of the vehicle.

### BACKGROUND

Side stanchions for load platforms of vehicles, such as trailers, are often used when a simple and flexible load protection solution is desired where, for example, the side stanchions can support a roof structure and at the same time protect the load from being displaced. The roof structure may comprise roof profiles supported by side stanchions and canopy stanchions, canopy roofs or other structures that are used to prevent the load from being exposed to dirt, rain and/or wind. The side stanchions have an elongated shape and are usually arranged in a vertical direction relative to the surface of the load platform.

DE 20 2011 052306 U1 discloses a side stanchion for load platforms of vehicles exhibiting the features of the preamble of claim 1.

In order to be able to easily release the side stanchions from their attachments and to enable the roof structure to be raised when loading and unloading goods, the side stanchions have a telescopic function which allows the side stanchions to be extended during handling. The side stanchions comprise a lower stanchion portion and an upper stanchion portion where the lower stanchion portion and the upper stanchion portion are telescopically arranged relative to each other. Thus, the lower stanchion portion can be displaced relative to the upper stanchion portion when being fitted to the vehicle and to the roof structure. A lower end of the lower stanchion portion is provided with a closing mechanism for detachably connecting the side stanchion to the vehicle or the platform. An upper end of the upper stanchion portion is arranged to be connected to the roof profile in such a way that the side stanchion can be moved in a direction along the roof profile. The roof profile normally has an extension in a horizontal direction and is often arranged parallel to the surface of the load platform.

Since the side stanchions have a telescopic function, the roof structure may unintentionally move upwards which can in some cases be disadvantageous when handling the side stanchions, for example when loading and unloading goods. The telescopic function combined with the fact that the side stanchions are movable relative to the roof profile further means that it can be complicated to place the side stanchions in a correct position when attaching the side stanchions to the fastener of the vehicle or the platform.

There is thus a need for an improved construction of the side stanchions.

### SUMMARY

The object of the present solution is to provide a side stanchion to load platforms of vehicles where the aforementioned problems do not exist. This object is achieved, at least in part, by the features of the independent claims. The independent claims comprise further developments of the side stanchion for load platforms of vehicles.

The solution relates to a side stanchion for load platforms of vehicles comprising a lower stanchion portion and an upper stanchion portion, wherein the lower stanchion portion and the upper stanchion portion extend in a first longitudinal direction of the side stanchion, wherein the upper stanchion portion interact with and is movable relative to the lower stanchion portion. The lower stanchion portion is at a lower end arranged to be detachably connected to a fastener of the vehicle, and the upper stanchion portion is arranged at an upper end to be connected to a roof profile of the vehicle, wherein the roof profile has an extension in a second longitudinal direction across the first longitudinal direction. The upper stanchion portion comprises a carriage portion at the upper end arranged to interact with the roof profile so that the side stanchion is displaceable relative to the roof profile in the other longitudinal direction. The side stanchion comprises a closing mechanism arranged to connect the side stanchion with the fastener, whereby the closing mechanism, during closing, attaches the side stanchion to the fastener and displaces the lower stanchion portion relative to the upper stanchion portion in the first longitudinal direction from an extended position to an inserted position. The carriage portion comprises an abutment surface arranged to interact with the roof profile in the inserted position, wherein the carriage portion in the inserted position is pressed against the roof profile in the first longitudinal direction via the lower stanchion portion. The side stanchion comprises a locking body for locking the lower stanchion portion and the upper stanchion portion to each other, wherein the locking body can be arranged to engage with the lower stanchion portion and the upper stanchion portion in the inserted position to prevent movement between the lower stanchion portion and the upper stanchion portion. The carriage portion comprises a holder portion, a first pivot arm and a second pivot arm, wherein the carriage portion comprises the abutment surface and is firmly connected to the upper stanchion portion. The first pivot arm and the second pivot arm are pivotally connected to the holder portion.

The advantages of these features are that, through the construction of the abutment surface of the carriage portion, the displacement of the side stanchion relative to the roof profile can be prevented when the side stanchion is in the inserted position. In this manner, the side stanchion, through the abutment, can be retained in a correct position relative to the roof profile, implying that the side stanchions are easy to place in the correct position when attaching the side stanchions to the fastener of the vehicle or the platform. Furthermore, the locking body of the side stanchion means that the lower stanchion portion and the upper stanchion portion lock relative to each other by the locking body engaging with the stanchion portions in the inserted position of the side stanchion. By preventing the movement between the lower stanchion portion and the upper stanchion portion, a function is obtained which prevents the roof structure from moving upwards accidently. Thus, the handling of the side stanchions becomes greatly simplified when loading and unloading goods. The pivot arms are arranged to connect the side stanchion to the roof profile in such a way that the side stanchion can be displaced relative to the roof profile both in the first longitudinal direction and in the second longitudinal direction. The pivotal connection of the pivot arms with the holder portion allows the side stanchion to be easily displaced in the first longitudinal direction to create the clamping force between the abutment surface and the roof profile when the side stanchion is pressed against the roof profile, and to release the clamping force when the side stanchion is displaced in a direction from the roof profile. The pivot arms also contribute to the side stanchions in the extended position to be easily displaced along the roof profile without any locking between the roof profile and the side stanchion due to so-called notching or drawer box effect, which can occur in side stanchions without pivot arms.

According to one embodiment, the abutment surface in the projected position abuts the roof profile to prevent, with a clamping force, the side stanchion from being displaced relative to the roof profile in the other longitudinal direction. The clamping force is produced when the abutment surface interacts with the roof profile in the inserted position in such a way that the clamping force prevents the displacement of the side stanchion along the roof profile. The clamping force causes friction between the abutment surface and the roof profile which creates a frictional force that holds the side stanchion firmly against the roof profile. In this manner, the side stanchion, through abutment, can be retained in a correct position relative to the roof profile, implying that the side stanchions are easy to place in a correct position when attaching the side stanchions to the fastener of the vehicle or the platform.

According to one embodiment, the first pivot arm and the second pivot arm are provided with wheels, wherein the wheels are arranged to interact with a rail in the roof profile so that the side stanchion is displaceable relative to the roof profile in the second longitudinal direction. The wheels allow the side stanchion to be easily moved with low friction relative to the rail as they are intended to roll on the rail of the roof profile.

In one embodiment, the side stanchion further comprises a push rod which is movably arranged relative to the carriage portion in the first longitudinal direction and arranged to interact with the first pivot arm and the second pivot arm, wherein the push rod in the extended position of the side stanchion is in a disengaged position from the first pivot arm and the second pivot arm so that the first pivot arm and the second pivot arm are freely movable relative to the holder portion, and whereby the push rod in the inserted position of the side stanchion is in an engaged position with the first pivot arm and the second pivot arm so that the first pivot arm and the second pivot arm, through actuation of the push rod, are arranged in a lowered position in relation to the holder portion where the abutment surface interacts with the roof profile. Thus, the push rod is intended to interact movably with the pivot arms from the disengaged position as the side stanchion is moved from the extended position to the inserted position, wherein the push rod is to rotate the pivot arms as the holder portion of the carriage portion moves towards the roof profile when moving to the inserted position. By rotating the pivot arms, the abutment surface can come into contact with the roof profile and thus create the clamping force which prevents the displacement of the side stanchion relative to the roof profile.

According to one embodiment, the lower stanchion portion at an upper end is provided with an upper portion intended to interact with the push rod, which upper portion acts as an interacting surface for the actuation of the push rod.

According to one embodiment, the upper portion of the lower stanchion portion is arranged to displace the lower stanchion portion in the first longitudinal direction from the extended position to the inserted position relative to the upper stanchion portion in the first longitudinal direction from the disengaged position to the engaged position. The upper portion of the lower stanchion portion is thus arranged as a surface or a portion which moves the push rod in a direction towards the roof profile as the side stanchion is moved from the extended position to the inserted position in order to rotate the pivot arms and thereby provide the clamping force which prevents the displacement of the side stanchion relative to the roof profile.

According to one embodiment, an upper portion of the lower stanchion portion is arranged, through displacement of the lower stanchion portion relative to the upper stanchion portion in the first longitudinal direction from the inserted position to the extended position, to allow the displacement of the push rod in the first longitudinal direction from the engaged position to the disengaged position. As the side stanchion is moved from the inserted position to the extended position, the pivot arms are rotated so that the clamping force disappears, whereby the push rod is moved to the disengaged position. In the disengaged position, the side stanchion can be easily moved relative to the roof profile.

According to one embodiment, the push rod comprises a first gear portion and a second gear portion. The first pivot arm comprises a first gear segment and the second pivot arm comprises a second gear segment. The first gear portion is arranged to interact with the first gear segment and the second gear portion is arranged to interact with the second gear segment, wherein the first pivot arm and the second pivot arm in displacing the push rod in the first longitudinal direction when the gear portions interact with the gear segments, are arranged to rotate relative to the holder portion. The gear portions and the gear segments, when engaging with each other, enable the pivot arms to be rotated when moving the push rod in the first longitudinal direction.

According to one embodiment, the locking body comprises a locking pin which is movably arranged relative to the lower stanchion portion between an unlocked position and a locked position, wherein the locking pin in the unlocked position is disengaged from the upper stanchion portion, and wherein the locking pin in the locked position, when the side stanchion is in the inserted position, is engaged with the upper stanchion portion to prevent movement between the lower stanchion portion and the upper stanchion portion in the first longitudinal direction. The locking pin ensures that the upper stanchion portion and the lower stanchion portion cannot be displaced relative to each other in the first longitudinal direction when the side stanchion is in the inserted position. By preventing movement between the lower stanchion portion and the upper stanchion portion in the first longitudinal direction through the locking means, a function of the side stanchion is ensured which prevents the roof structure from moving upwards unintentionally.

According to one embodiment, the closing mechanism, when being closed, is arranged to move the locking pin from the unlocked position to the locked position when the lower stanchion portion is displaced relative to the upper stanchion portion in the first longitudinal direction from the extended position to the inserted position. The movement of the locking pin by means of the closing mechanism provides a simple locking between the upper stanchion portion and the lower stanchion portion when the side stanchion is in the inserted position.

According to one embodiment, the upper stanchion portion comprises an extension portion extending in the first longitudinal direction towards the closing mechanism, wherein the extension portion is provided with a recess arranged to interact with the locking pin so that the locking pin in the locked position is in engagement with the recess. The extension portion ensures that the upper stanchion portion and the lower stanchion portion are locked together in a simple and secure manner through the recess. The recess is arranged so that the locking pin, when in engagement with the recess, prevents a displacement of the stanchion portions relative to each other.

### DESCRIPTION OF FIGURES

The side stanchion is described in more detail below with reference to the embodiments shown in the accompanying drawings, in which
- Fig. 1: schematically shows one perspective view of a side stanchion according to one embodiment,
- Fig. 2a-b: schematically show a perspective view and a side view of an upper portion of the side stanchion in an extended position connected to a roof profile,
- Fig. 3a-b: schematically show a perspective view as well as a side view of the upper portion of the side stanchion in an inserted position connected to the roof profile,
- Fig. 4: schematically shows a front view of the upper portion of the side stanchion with exposed pivot arms in an inserted position connected to the roof profile,
- Fig. 5a-c: schematically show in different views a carriage portion of the side stanchion in the extended position,
- Fig. 6a-c: schematically show a perspective view and side views of a closing mechanism of the side stanchion,
- Fig. 7a-b: schematically show a front view and a perspective view of the side stanchion with extension portion, and
- Fig. 8a-b: schematically show perspective views of the closing mechanism in an open position and in a closed position.

### DESCRIPTION OF EMBODIMENTS

Various embodiments of the side stanchion will be described below in conjunction with the accompanying drawings to illustrate, but not limit, the scope of the side stanchion.

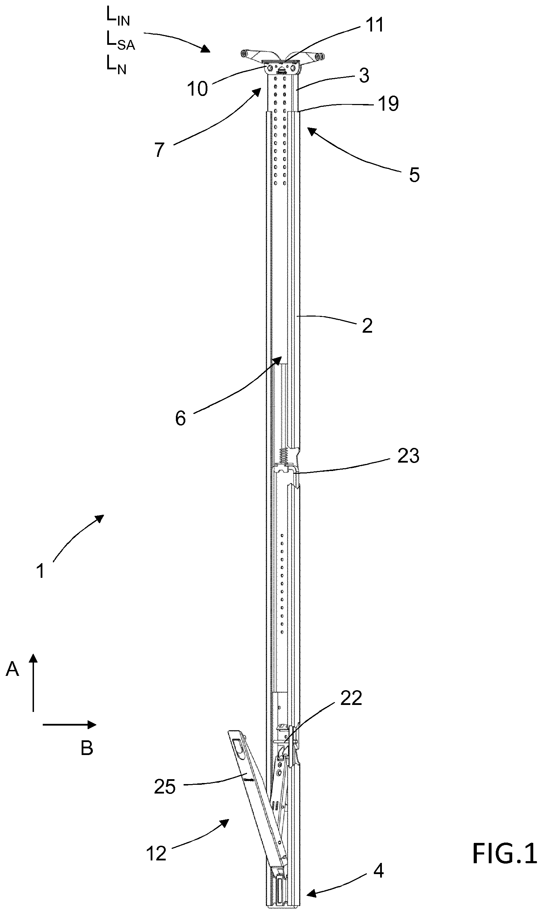

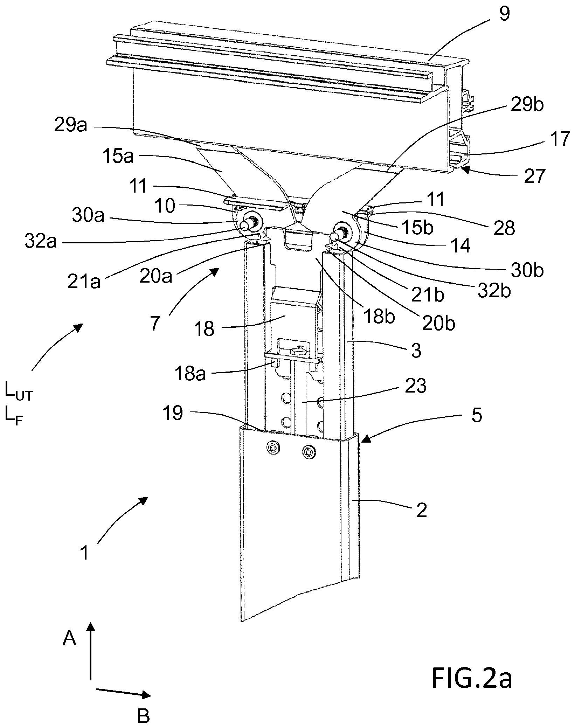

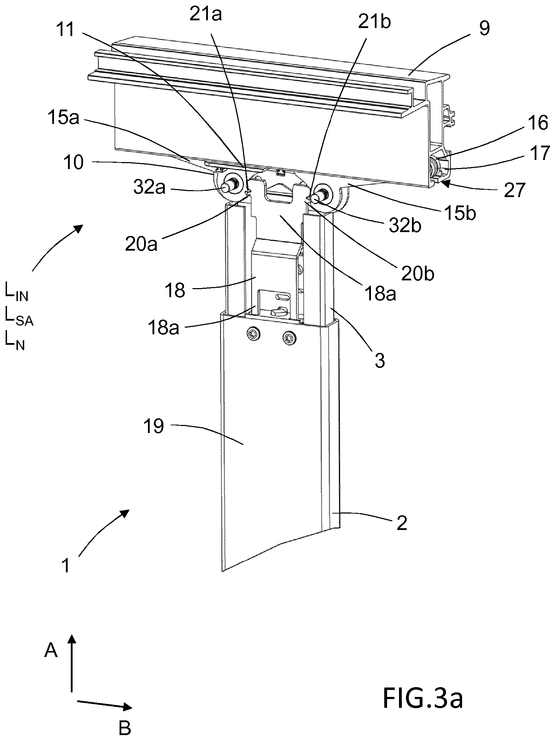

Fig. 1 schematically shows a side stanchion 1 for load platforms of vehicles, wherein the side stanchion 1 has an extension in a first longitudinal direction A. The side stanchion 1 is intended to be used in the load platform of vehicles, such as a trailer, and when the side stanchion 1 is arranged on the load platform, it normally has an extension in a substantially vertical direction, which means that the first longitudinal direction A of the side stanchion, when the side stanchion 1 is attached to the surface, coincides with a vertical or substantially vertical direction. A plurality of side stanchions 1 are often provided on the load platform of the vehicle and are used to support a roof structure or similar device and at the same time provide protection against the displacement of loads to prevent goods loaded on the load platform from moving during transport. The roof structure may comprise one or more roof profiles 9 supported by the side stanchions 1, see Figs 2a-b and 3a-b. Often, the load system has roof profiles 9 on each side of the load platform extending along the entire length of the load platform for a flexible load solution. Canopy sides, canopy roofs or other structures are used to avoid that the load is exposed to dirt, rain and/or wind. The side stanchions 1 have an elongated shape and are normally arranged between the fasteners 8 of the vehicle and the roof profiles 9, where the fasteners 8 are normally arranged in connection with the load platform.

The side stanchion 1, when positioned during use, comprises a lower stanchion portion 2 and an upper stanchion portion 3, as shown in Fig. 1, where both the lower stanchion portion 2 and the upper stanchion portion 3 have an extension in the first longitudinal direction A of the side stanchion 1. The upper stanchion portion 3 interacts with and is movably arranged relative to the lower stanchion portion 2. Thus, with this configuration, the upper stanchion portion 3 can be displaced relative to the lower stanchion portion 2 so that the length of the side stanchion 1 in the first longitudinal direction A can be changed and adjusted to different heights of the roof structure, which may vary depending on the configuration of the load platform or the roof construction on which the stanchion is intended for use. Thus, the side stanchion 1 has a telescopic configuration in that the lower stanchion portion 2 and the upper stanchion portion 3 are telescopically arranged relative to each other. For example, the telescopic configuration facilitates the release of the side stanchion 1 from the fastener 8. Furthermore, raising the roof structure is possible when loading and unloading goods by means of the telescopic function of the side stanchions 1, as the side stanchions 1 can be extended during handling. Thus, the lower stanchion portion 2 can be displaced relative to the upper stanchion portion 3 when being fitted to the vehicle and to the roof structure. The lower stanchion portion 2 and the upper stanchion portion 3 are made of a suitable material such as steel, aluminium, other suitable metallic materials, plastics materials, composite materials or mixtures of various materials.

The lower stanchion portion 2 is provided with a lower end 4 and an upper end 5, and the upper stanchion portion 3 is provided with a lower end 6 and an upper end 7, see for example Fig. 1. According to the exemplary embodiments shown in the figures, the upper stanchion portion 3 is inserted into the lower stanchion portion 2 to achieve the telescopic function of the side stanchion 1. The stanchion portions 2,3 have such dimensions that the upper stanchion portion 3 is easily displaceable relative to the lower stanchion portion 2 as it is inserted into the lower stanchion portion 2, which can be achieved by the stanchion portions being dimensioned with a small clearance between one another in a direction transverse to the first longitudinal direction A when the upper stanchion portion 3 is inserted into the lower stanchion portion 2. It is also possible to alternatively arrange the lower stanchion portion 2 instead so that it is inserted into the upper stanchion portion 3.

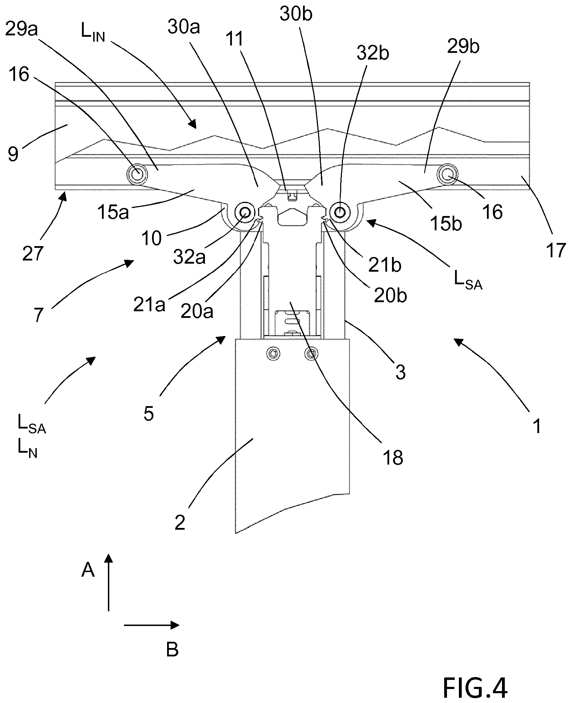

The lower stanchion portion 2 is arranged at the lower end 4 to be detachably connected to the fastener 8 of the vehicle, and the upper stanchion portion 3 is arranged at the upper end 7 to be connected to the roof profile 9 of the vehicle. The roof profile 9 has an elongated shape with an extension in a second longitudinal direction B across the first longitudinal direction A. Part of the roof profile 9 is shown schematically in Figs 2a-b, 3a-b and 4.

The upper stanchion portion 3 comprises, at the upper end 7, a carriage portion 10 which is arranged to interact with the roof profile 9 so that the side stanchion 1 through the carriage portion 10 is displaceable relative to the roof profile 9 in the other longitudinal direction B. The roof profile 9 can, for example, be formed as rail 17 on which the carriage portion 10 is movably arranged in a manner which enables the carriage portion 10 to be displaced in the second longitudinal direction B along the extension of the roof profile 9. The roof profile 9 has a suitable cross-sectional profile to interact with the side stanchion 1 and may be made of aluminium, steel, composite material or other suitable materials or material combinations. When the side stanchion 1 is arranged on the roof profile 9 via the carriage portion 10, the side stanchion 1 will suspend from the roof profile 9 as the lower stanchion portion 2 of the side stanchion 1 is not attached to the fastener 8, and through the telescopic configuration, the side stanchion 1 is then in an extended position L_{UT}. In the extended position L_{UT}, as the side stanchion 1 is suspended from the roof profile 9, the lower stanchion portion 2 is displaced in a downward direction relative to the upper stanchion portion 3. The weight of the lower stanchion portion 2 causes it to be pulled down to the extended position L_{UT} when the side stanchion 1 is not attached to the fastener 8. When the lower stanchion portion 2 is attached to the fastener 8, the side stanchion 1 will be supported by the structure of the fastener 8 so that the side stanchion 1 assumes a stable position in an inserted position L_{IN} where the side stanchion 1 supports the roof profile 9 and also prevents the displacement of load during transport.

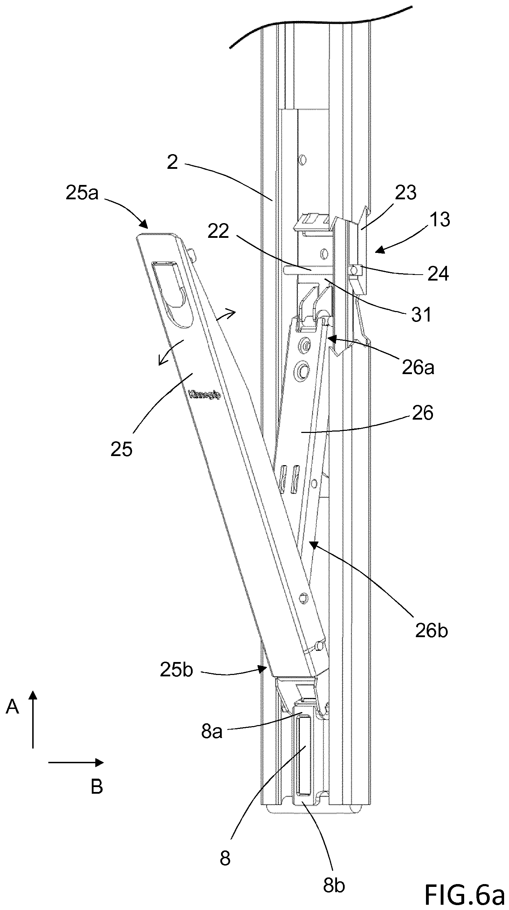

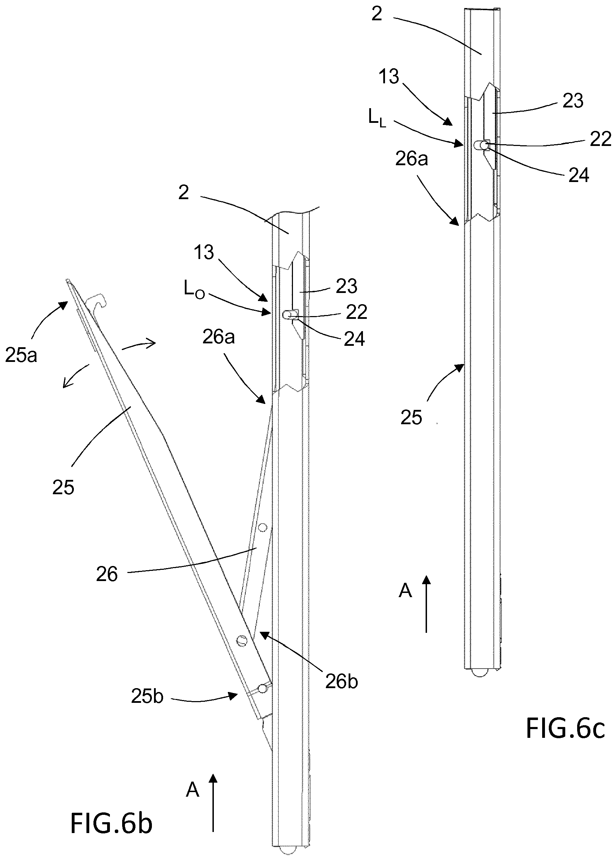

The side stanchion 1 comprises a closing mechanism 12, see for example Figs 6a, 6b and 6c, which is arranged to connect the side stanchion 1 with the fastener 8 so that the side stanchion 1 is fixed to the fastener 8 by the closing mechanism 12 and is released, when opening, from the fastener 8. During closing, the closing mechanism 12 attaches the side stanchion 1 to the fastener 8 in such a way that the lower stanchion portion 2 is displaced relative to the upper stanchion portion 3 in the first longitudinal direction A from the extended position L_{UT} to the inserted position L_{IN}.

The closing mechanism 12 has a suitable configuration which allows the side stanchion 1 to move from the extended position L_{UT} to the inserted position L_{IN} upon closing, and allows, upon opening, the side stanchion 1 to move from the inserted position L_{IN} to the extended position L_{UT}. According to the exemplary embodiment shown in Figs 1, 6a and 6b, the closing mechanism 12 has a conventional configuration and comprises a closing arm 25 and a joint 26. An upper portion 26a of joint 26 is jointly attached to the lower stanchion portion 2 and a lower portion 26b of joint 26 is jointly attached to the closing arm 25. A first portion 25a of the closing arm 25 is intended to manually move the closing mechanism 12 between a closed position and an open position, and a second portion 25b of the closing arm 25 is configured to engage with an upper portion 8a of the fastener 8, see Fig. 6a. The upper portion 8a of the fastener 8 may, for example, be provided with a notch or a recess that interacts with the second portion 25b of the closing arm 25. As shown in the figures, the lower portion 26b of the joint 26 is jointly attached to the closing arm 25 between the first portion 25a and the second portion 25 of the closing arm. It is also possible to configure a lower portion 8b of the fastener 8 with a recess or a notch so that the lower portion 8b in the closed position interacts with the lower end 4 of the lower stanchion portion 2 for a more secure holding of the side stanchion 1.

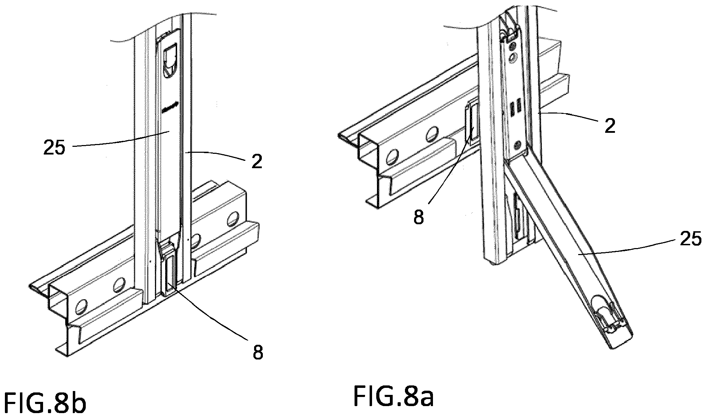

When the side stanchion 1 is in the extended position L_{UT} and is to be secured to the fastener 8, the first portion 25a of the closing arm 25 is turned downwards and outwards to a position where the second portion 25b of the closing arm 25 can be placed against the upper portion 8a of the fastener 8 in such a way that the portions can engage with each other. By angling out the side stanchion 1 in the extended position L_{UT} slightly in one direction from the fastener 8 as it hangs in the roof profile 9 and pushing the side stanchion in an upward direction, it is possible to position the second portion 25b of the closing arm 25 against the upper portion 8a of the fastener 8. When the second portion 25b of the closing arm 25 engages with the upper portion 8a of the fastener 8, when closing, the first portion 25a is twisted in an upward direction towards the side stanchion 1. By the twisting closing movement of the closing arm 25 and by the articulated attachment of the closing arm 25 to the joint 26, the lower stanchion portion 2 is moved in a known manner in an upward direction towards the roof profile 9, so that, by means of its telescopic function, the side stanchion 1 is pressed from the extended position L_{UT} to the inserted position L_{IN}. In the closed position, the lower portion of the side stanchion 1 is also pressed against the fastener 8. In Fig. 8a, the closing mechanism 12 is shown in the open position and in Figs 6c and 8b the closing mechanism 12 is shown in the closed position. In Figs 1, 6a and 6b, the closing mechanism 12 is shown in a position between the open position and the closed position. The closing mechanism 12 may be provided with a groove or similar device for locking the closing mechanism to the lower stanchion portion 2 in the closed position to prevent the closing mechanism 12 from opening unintentionally.

When opening the closing mechanism 12 so that the side stanchion can be released from the fastener 8, the first portion 25a of the closing arm 25 is turned downwards and outwards to a position where the second portion 25b of the closing arm 25 can be released from the upper portion 8a of the fastener 8 in such a way that the portions no longer engage with each other. During the opening sequence itself, the second portion 25b of the closing arm 25 engages with the upper portion 8a of the fastener 8. By the twisting opening movement of the closing arm 25 and by means of the articulated attachment of the closing arm 25 to the joint 26, the lower stanchion portion 2 is moved in a known manner in a downward direction from the roof profile 9 so that, by its telescopic function, the side stanchion 1 is drawn from the inserted position L_{IN} to the extended position L_{UT}. When the first portion 25a of the closing arm 25 is removed from the upper portion 8a of the fastener 8, the side stanchion can completely fall down to the extended position L_{UT}.

The carriage portion 10 is arranged as described above to interact with the roof profile 9 so that the side stanchion 1 through the carriage portion 10 is displaceable relative to the roof profile 9 in the other longitudinal direction B. The carriage portion 10 comprises an abutment surface 11, see Figs 2a-b, 3a-b, and 4, where the abutment surface 11 is arranged to interact with the roof profile 9 in the inserted position L_{IN}. The carriage portion 10 is configured so that in the inserted position L_{IN}, when the side stanchion 1 is fixed to the fastener 8, it is pressed against the roof profile 9 in the first longitudinal direction A via the lower stanchion portion 2. The side stanchion 1 is configured so that the abutment surface 11 in the inserted position L_{IN} abuts the roof profile 9 with a clamping force in order to prevent the displacement of the side stanchion 1 relative to the roof profile 9 in the other longitudinal direction B. Thus, the closing mechanism 12 acts on the carriage portion 10 in an upward direction in the closed position to create a clamping force between the abutment surface 11 and the roof profile 9. The carriage portion 10 is made of a suitable material such as steel, aluminium, other suitable metallic materials, plastics materials, composite materials or mixtures of various materials. The abutment surface is formed of a suitable material, such as metal, rubber, plastic or composite material, which ensures good friction between the abutment surface 11 and the roof profile 9. The abutment surface 11 may be part of the carriage portion 10 and may then be made of the same material as the carriage portion 10.

The clamping force is produced when the side stanchion 1 during closing with the closing mechanism 12 is pressed in a direction towards the roof profile 9, wherein the abutment surface 11 is pressed against and interacts with the roof profile 9 in the inserted position L_{IN} when the side stanchion 1 is fixed to the fastener 8 in such a way that the clamping force prevents the displacement of the side stanchion 1 along the roof profile 9. The clamping force causes friction between the abutment surface 11 and the roof profile 9 which creates a frictional force that holds the side stanchion 1 firmly against the roof profile 9. The side stanchion 1 can be held in the correct position relative to the roof profile 9 by the abutment, which makes the side stanchion 1 easy to position when being attached to the fastener 8. The roof profile 9 may, for example, be provided with a lower edge 27 or similar surface with which the abutment surface 11 can interact.

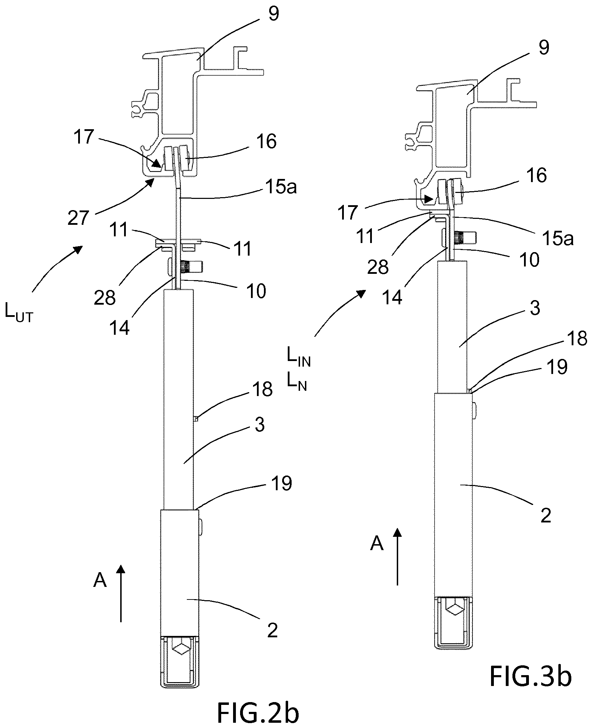

The carriage portion 10 comprises a holder portion 14 attached to the upper stanchion portion 3, a first pivot arm 15a and a second pivot arm 15b, as shown in Figs 2a, 3a, 4, 5a, 5b and 5c. The first pivot arm 15a is rotatably connected in an inner portion 30a to the holder portion 14 about a first rotational shaft 32a, with, for example, a screw or other suitable fastening element. The second pivot arm 15b is rotatably connected in an inner portion 30b to the holder portion 14 about a second rotational shaft 32b, with, for example, a screw or other suitable fastening element. The holder portion 14 may be formed of two separate opposite side pieces 29 on which upper angled side portions 28 are arranged. The holder portion 14 comprises the abutment surface 11, and the abutment surface 11 is, for example, arranged on the upper side of one or both of the upper angled side portions 28 of the holder portion 14, see Figs 2a, 2b, 3a and 3b. Thus, the carriage portion 10 may be provided with two abutment surfaces 11 which interact with the roof profile 9. It is also possible to construct the carriage portion 10 so that it has three or more abutment surfaces 11 which interact with the roof profile 9. Further, the holder portion 14 is firmly connected to the upper end 7 of the upper stanchion portion 3. The first pivot arm 15a and the second pivot arm 15b are pivotally connected to the holder portion 14. The first pivot arm 15a is provided with wheels 16 in an outer portion 29a, and the second pivot arm 15b is provided with wheels 16 in an outer portion 29b. The wheels 16 are arranged to interact with the rail 17 in the roof profile 9 so that the side stanchion 1 is displaceable relative to the roof profile 9 in the other longitudinal direction B. The wheels are intended to roll on the rail 17 of the roof profile 9 and allow the side stanchion 1 to be easily moved with low friction relative to the rail 17.

The side stanchion 1 also comprises a push rod 18 which is movably arranged relative to the upper stanchion portion 3 and the carriage portion 10 in the first longitudinal direction A. The push rod 18 is arranged in the upper end 7 of the upper stanchion portion 3 and may, for example, depending on the configuration of the side stanchion 1, be slidably mounted relative to the upper stanchion portion 3 so that it can move freely between two end positions when it is not actuated by or in engagement with the other components of the side stanchion 1. The push rod 18 is arranged to interact with an upper portion 19 of the lower stanchion portion 2 through a lower end 18a that is arranged on the push rod 18, and the upper portion 19 of the lower stanchion portion 2 can, for example, be provided with an upper edge or similar surface which interacts with push rod 18. Thus, the upper portion 19 is provided at the upper end 5 of the lower stanchion portion 2.

The push rod 18 is also arranged to interact with the first pivot arm 15a and the second pivot arm 15b through an upper end 18b that is arranged on the push rod 18. The push rod 18 is in the extended position L_{UT} of the side stanchion 1 in a disengaged position L_{F} from the first pivot arm 15a and the second pivot arm 15b so that the first pivot arm 15a and the second pivot arm 15b are freely movable relative to the holder portion 14. The push rod 18 with its upper end 18b in the side stanchion's 1 inserted position L_{IN} are in an engaged position L_{SA} with the first pivot arm 15a and the second pivot arm 15b so that the first pivot arm 15a and the second pivot arm 15b are arranged, by actuation of the push rod 18, in a lowered position L_{N} relative to the holder portion 14 where the abutment surface 11 interacts with the roof profile 9 to prevent the displacement of the side stanchion 1 in the second longitudinal direction B along the roof profile 9.

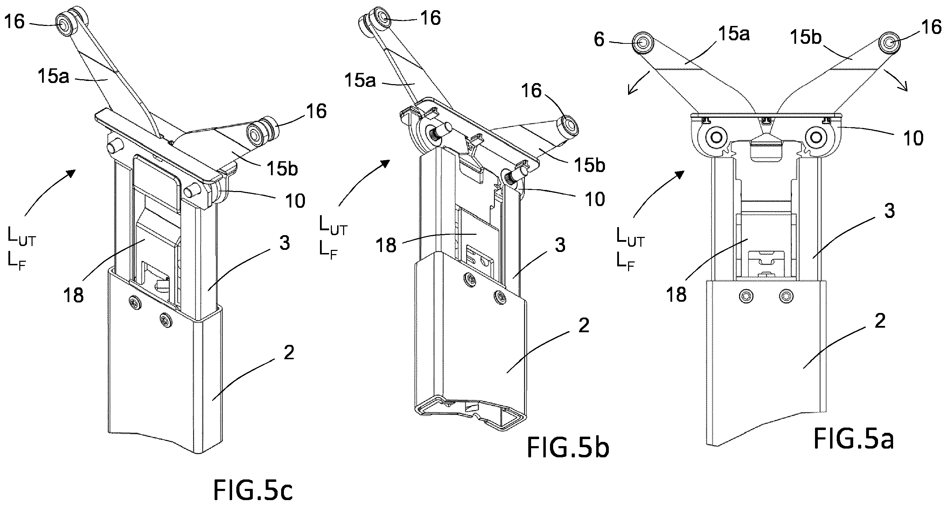

When closing the closing mechanism 12, as described above, the lower stanchion portion 2 is pressed in an upward direction. As the upper stanchion portion 3 is suspended from the roof profile 9 due to gravity, the movement of the side stanchion begins from the extended position L_{UT} to the inserted position L_{IN}. As the lower stanchion portion 2 has moved a certain distance upwards while the upper stanchion portion 3 suspends from the roof profile, the upper portion 19 of the lower stanchion portion will come into contact and interact with the lower end 18a of the push rod 18. Upon continued movement, the upper end 18b of the push rod 18 will interact with the pivot arms 15a,15b so that they are rotated with opposite rotational directions about the respective first rotational shaft 32a and second rotational shaft 32b, which is described below in more detail. The closing movement of the closing mechanism 12 causes the side stanchion 1 to move from the extended position L_{UT} to the inserted position L_{IN}, while the push rod 18 and the side arms 15a,15b move from the disengaged position L_{F} to the engaged position L_{SA}. When the closing mechanism 12 is in its fully closed position, the pivot arms 15a,15b will have moved to their lowered position L_{N} relative to the holder portion 14, and the abutment surface 11 will have been pushed against the roof profile 9 by the movement of the side stanchion 1 to prevent the displacement of the side stanchion 1 in the other longitudinal direction B along the roof profile 9. From the position shown in Figs 2a, 2b and 5a-c, when closing, the first pivot arm 15a rotates counter-clockwise about the first rotational shaft 32a and the second pivot arm 15b rotates clockwise about the second rotational shaft 32b.

During opening of the closing mechanism 12, the lower stanchion portion 2 and the upper stanchion portion 3 are moved in a downward direction. When the upper stanchion portion 3 has been moved a certain distance so that the pivot arms 15a,15b rotate in an upward direction relative to the holder portion 14 with opposite rotational directions so that the push rod 18 no longer interacts with the pivot arms 15a,15b, the upper stanchion portion 3 in the disengaged position L_{F} will be suspended from the roof profile 9 by gravity. The opening movement of the closing mechanism 12 causes the side stanchion 1 to move from the inserted position L_{IN} to the extended position L_{UT}, simultaneously with the push rod 18 and the side arms 15a,15b moving from the engaged position L_{SA} to the disengaged position L_{F}. Since the closing mechanism 12 is in its fully open position and released from the fastener 8, the side stanchion 1 can be inserted into the other longitudinal direction B along the roof profile 9 since the abutment surface 11 no longer interacts with the roof profile 9. From the position shown in Figs 1, 3a, 3b and 4, the first pivot arm 15a rotates clockwise about the first rotational shaft 32a during opening, and the second pivot arm 15b rotates counter-clockwise about the second rotational shaft 32b.

Thus, the upper portion 19 of the lower stanchion portion 2 is arranged, by means of displacement of the lower stanchion portion 2 relative to the upper stanchion portion 3 in the first longitudinal direction A from the extended position L_{UT} to the inserted position L_{IN}, to move the push rod 18 in the first longitudinal direction A from the disengaged position L_{F} to the engaged position L_{SA}. The upper portion 19 of the lower stanchion portion 2 is correspondingly arranged to, by means of displacement of the lower stanchion portion 2 relative to the upper stanchion portion 3 in the first longitudinal direction A from the inserted position L_{IN} to the extended position L_{UT}, to enable displacement of the push rod 18 in the first longitudinal direction A from the engaged position L_{SA} to the disengaged position L_{F}.

The upper end 18b of the push rod 18 comprises a first gear portion 20a and a second gear portion 20b which are intended to interact with the first pivot arm 15a and the second pivot arm 15b. The first pivot arm 15a comprises in the inner portion 30a a first gear segment 21a, and the second pivot arm 15b comprises in the inner portion 30b a second gear segment 21b, as shown in Figs 2a, 3a and 4. The first gear portion 20a of the push rod 18 is arranged to interact with the first gear segment 21a of the first pivot arm 15a. The second gear portion 20b of the push rod 18 is arranged to interact with the second gear segment 21b of the second pivot arm 15b. By this construction, the first pivot arm 15a and the second pivot arm 15b, when displacing the push rod 18 in the first longitudinal direction A and when the gear portions 20a,20b interact with the gear segments 21a, 21b, are arranged to rotate relative to the holder portion 14 about the first rotation shaft 32a and the second rotation shaft 32b, respectively.

In connection with the closing of the closing mechanism 12 when the side stanchion 1 is to be fastened to the fastener 8, the push rod 18 is pushed upwards by actuating the lower stanchion portion 2 along the side stanchion 1 in the first longitudinal direction A from the extended position L_{UT} and the disengaged position L_{F} As the push rod 18 has moved a certain distance, the first gear portion 20a and the second gear portion 20b will engage with the first gear segment 21a and the second gear segment 21b, respectively, with the pivot arms 15a,15b are in the engaged position L_{SA} with the push rod 18. Upon the continuous movement of the push rod 18 in the engaged position L_{SA}, the gear portions 20a,20b will interact with the gear segments 21a,21b so that the pivot arms 15a,15b are twisted in the directions of rotation which cause the pivot arms' respective outer portions 29a,29b to rotate in a downward direction relative to the holder portion 14, which is indicated by arrows in Fig. 5a, wherein the holder portion 14 moves in a direction towards the roof profile 9 and the pivot arms 15a,15b are positioned in their lowered position L_{N}. Thus, when closing the closing mechanism 12, the upper stop portion 3 is pulled upwards by the rotating movements of the pivot arms 15a,15b concurrently with the lower stanchion portion 2 being pushed upwards by the closing mechanism 12. Through these interacting movements when closing, the side stanchion 1 is moved in one direction upwards and at the same time the side stanchion 1 is moved from the extended position L_{UT} to the inserted position L_{IN}.

In connection with the opening of the closing mechanism 12 when the side stanchion 1 is to be released from the fastener 8, the push rod 18 is moved by gravity along the side stanchion 1 in the first longitudinal direction A from the inserted position L_{IN} and the lowered position L_{N} When the push rod 18 is moving in the engaged position L_{SA}, the gear portions 20a,20b will interact with the gear segments 21a,21b so that the pivot arms 15a,15b are twisted in rotational directions which cause the pivot arms and outer portions 29a,29b instead to rotate in an upward direction relative to the holder portion 14, wherein the holder portion 14 moves in a downward direction away from the roof profile 9. As the push rod 18 moves a certain distance, the engagement between the first gear portion 20a and the second gear portion 20b ceases with the first gear segment 21a and the second gear segment 21b, respectively, wherein the push rod 18 is released from the pivot arms 15a,15b to the disengaged position L_{F}. Thus, at the opening of the closing mechanism 12, the upper stanchion portion 3 is moved downwards by the rotating movements of the pivot arms 15a,15b while the lower stanchion portion 2 is moved downwards by the closing mechanism 12 and gravity. Through these interacting movements at opening, the side stanchion 1 moves in a downward direction and the side stanchion 1 moves during the movement from the inserted position L_{IN} to the extended position L_{UT}.

Depending on the configuration and construction of the push rod 18, the gear portions 20a,20b may consist of one or more gears which interact with the corresponding gear segments 21a,21b. Correspondingly, the configuration and construction of the pivot arms 15a,15b can be varied so that the gear segments 21a,21b consist of one or more gears which interact with the corresponding gear portions 20a,20b.

The side stanchion 1 further comprises a locking body 13, see for example Figs 6a, 6b and 6c, for locking the lower stanchion portion 2 and the upper stanchion portion 3 to each other. The locking body 13 is formed in such a way that the lower stanchion portion 2 and the upper stanchion portion 3, when locked to each other, are prevented from moving in relation to each other in the first longitudinal direction A. The locking body 13 is arranged to engage with the lower stanchion portion 2 and the upper stanchion portion 3 in the inserted position L_{IN}, to prevent movement between the lower stanchion portion 2 and the upper stanchion portion 3. The locking between the lower stanchion portion 2 and the upper stanchion portion 3 is thus provided by the locking body 13 engaging with the stanchion portions 2,3 in the side stanchion's 1 inserted position L_{IN}. By preventing the movement in the first longitudinal direction A between the lower stanchion portion 2 and the upper stanchion portion 3 in the inserted position L_{IN} with the locking body 13, a function is obtained which prevents the roof structure from moving upwards unintentionally.

The locking body 13 comprises a locking pin 22 which is movably arranged relative to the lower stanchion portion 2 between an unlocked position Lo and a locked position L_{L}. In the unlocked position Lo, see Fig. 6b, the locking pin 22 is disengaged from the upper stanchion portion 3, and in the locked position L_{L}, see Fig. 6c, when the side stanchion 1 is in the inserted position L_{IN}, the locking pin 22 engages with the upper stanchion portion 3 to prevent movement between the lower stanchion portion 2 and the upper stanchion portion 3 in the first longitudinal direction A. By this function, the locking pin 22 of the locking body 13 ensures that the lower stanchion portion 2 and the upper stanchion portion 3 cannot be displaced relative to each other in the first longitudinal direction A when the side stanchion 1 is in the inserted position L_{IN}. Figs 6a, 6b and 6c show an embodiment of the locking pin 22, where the locking pin 22 has an extended shape extending across the lower stanchion portion 2 of the side stanchion 1 in a direction substantially corresponding to the other longitudinal direction B. The locking pin 22 is resiliently arranged, for example, by a leaf spring 31 or similar spring arrangement relative to the lower stanchion portion 2 between an outer position in the unlocked position Lo and an inner position in the locked position L_{L.} When the locking pin 22 is in the unlocked position Lo, the leaf spring 31 pushes the locking pin outwards to position the locking pin in the locked position L_{L}, wherein the locking pin 22 is pressed inwards against the resilient force of the leaf spring 31 from the unlocked position Lo to the locked position L_{L}. The locking pin 22 is movably arranged relative to the lower stanchion portion 2 through grooves or openings in the construction of the lower stanchion portion 2 in which the locking pin 22 can move between the unlocked position Lo and the locked position L_{L}.

The closing mechanism 12 may be used to move the locking pin 22 from the unlocked position Lo to the locked position L_{L}, so that the closing arm 25 of the closing mechanism 12, during closing, presses the locking pin from the unlocked position Lo to the locked position L_{L}. When closing, the closing mechanism 12 is arranged to move the locking pin 22 from the unlocked position Lo to the locked position L_{L} when the lower stanchion portion 2 has been displaced relative to the upper stanchion portion 3 in the first longitudinal direction A from the extended position L_{UT} to the inserted position L_{IN}. The first portion 25a of the closing arm 25 may be configured as to close the locking pin 22 inwards during closing from the unlocked position Lo to the locked position L_{L}. The movement of the locking pin 22 by means of the closing mechanism 12 provides a simple locking between the lower stanchion portion 2 and the upper stanchion portion 3 when the side stanchion is in the inserted position L_{IN}.

It is also possible to configure the locking pin 22 in other ways. For example, a locking pin can be applied in a conventional manner in holes recessed from the lower stanchion portion 2 and the upper stanchion portion 3, respectively, whereby the locking pin 22 prevents the displacement between the stanchion portions as it is inserted into the holes.

Thus, the lower end 4 of the lower stanchion portion 2 is provided with the closing mechanism 12 to detachably connect the side stanchion 1 to the fastener 8 of the vehicle or platform, and the upper end 7 of the upper stanchion portion 3 is arranged to be connected to the roof profile 9 so that the side stanchion 1 can be moved in a direction along the roof profile 9 through the carriage portion 10. The roof profile 9 normally has an extension in a horizontal direction, which can substantially correspond to the second longitudinal direction B when the vehicle is on a plane horizontal surface. The roof profile 9 is often arranged parallel to the surface of the load platform.

In the case where the upper stanchion portion 3 has an extension in the first longitudinal direction A, where the lower end 6 of the upper stanchion portion 3 in the inserted position L_{IN} does not reach down to the closing mechanism 12, the upper stanchion portion 3 may comprise an extension portion 23. The extension portion 23 extends in the first longitudinal direction A towards the closing mechanism 12 to ensure that the locking pin 22, when positioned at the closing mechanism 12 at the lower end 4 of the lower stanchion portion 2, can engage with the upper stanchion portion 3 in the locked position. L_{L} when the side stanchion 1 is in the inserted position L_{IN}. For example, the extension portion 23 may be provided with a recess 24 arranged to interact with the locking pin 22 in the locked position L_{L} so that the locking pin 22 in the locked position L_{L} is in engagement with the recess 24, see Fig. 6c. Thus, in the inserted position L_{IN}, the recess 24 is positioned relative to the locking pin 22 in the first longitudinal direction A such that the locking pin 22 can engage with the recess 24. The extension portion 23 ensures that the upper stanchion portion 3 and the lower stanchion portion 2 are locked together in a simple and secure manner through the recess 24. The recess 24 is arranged so that the locking pin 22, when in engagement with the recess 24, prevents a displacement of the stanchion portions relative to each other in the first longitudinal direction A.

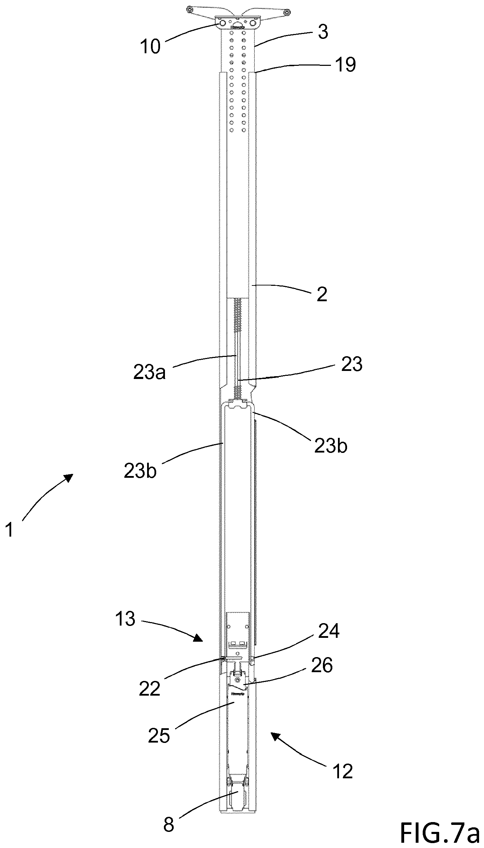

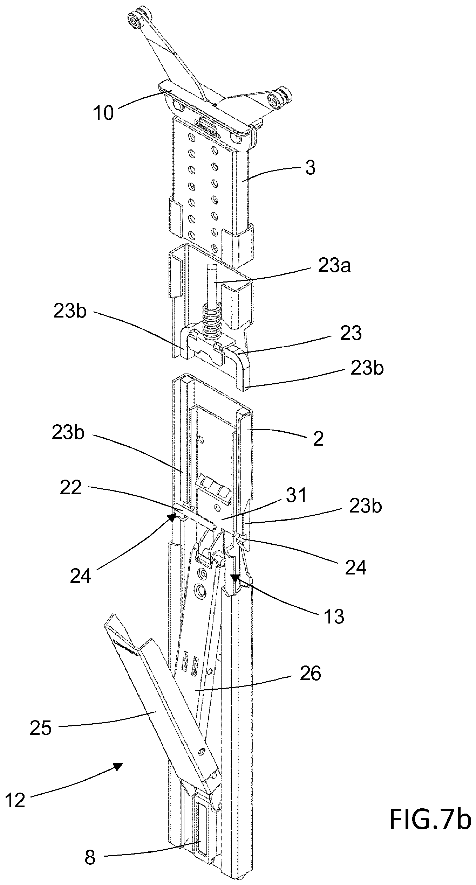

The extension portion 23 is secured in its upper portion to the upper stanchion portion 3 with suitable fasteners, such as screws, rivets, weld joints or the like, and the extension portion 23 suitably has an elongated shape extending in the first longitudinal direction A of the side stanchion 1, from the lower end 6 of the upper stanchion portion 3. The extension portion 23 is connected to the upper stanchion portion 3 and is thus movably arranged together with the upper stanchion portion 3 relative to the lower stanchion portion 2. The upper stanchion portion 3 with the extension portion 23 may be displaced relative to the lower stanchion portion 2 to obtain the telescopic function of the side stanchion 1. In the embodiment shown in Figs 7a and 7b, the extension portion 23 has an elongated fork-like shape with an upper fork portion 23a and two fork legs 23b extending in a downward direction in the first longitudinal direction A from the upper stanchion portion 3. The upper fork portion 23a is attached to the upper stanchion portion and also has an elongated shape with an extension in the first longitudinal direction A. Each fork leg 23b is provided in its respective lower portion with recesses 24 so that the locking pin 22 can engage with the recesses 24 of the respective fork legs 23b when the side stanchion 1 is in the inserted position L_{IN} and the locking body 13 is in the locked position L_{L} to prevent the lower stanchion portion 2 and the upper stanchion portion 3 from being displaced relative to each other in the first longitudinal direction A. The extension portion 23 may, for example, be made of a suitable metallic material, plastic material, composite material or a mixture of various materials. It is also possible to construct the extension portion 23 with only one elongate portion extending downwards in the first longitudinal direction A instead of two fork legs, where the portion at its lower end is provided with the recess 24.

As the side stanchions 1 have a telescopic function which is locked by the locking body 13, the roof structure in the inserted position L_{IN} is prevented from moving upwards unintentionally, which is desirable, for example when loading and unloading goods. The locked function of the side stanchion 1 in the inserted position L_{IN} in combination with the interaction of the abutment surface 11 with the roof profile 9 in the inserted position L_{IN} prevents the side stanchion 1 from being movable relative to the roof profile 9 and makes the side stanchions 1 easy to place in a correct position when attaching the side stanchions 1 to the fastener 8 of the vehicle or the platform.

The various components of the side stanchion 1 depend on the configuration and construction made of suitable materials such as steel, aluminium, other metallic materials, plastics materials, composite materials or mixtures of different materials.

The upper stanchion portion 3 and the lower stanchion portion 2 may, if desired, be resiliently suspended relative to each other so as to counteract the gravity which arises on the lower stanchion portion 2 when it is suspended from the roof profile. The resilient suspension facilitates the attachment of the side stanchion 1 to the fastener 8 as the stanchion needs to be lifted manually to the correct position. For example, the resilient suspension may be configured as a conventional spring assembly with a coil spring, which is often used in this type of side stanchions.

The side stanchion 1 is not to be considered limited to the above embodiments as these are intended solely to exemplify the side stanchion, as well as its application and use. Within the framework of the interpretation of the side stanchion, it is also possible to combine characteristics from different embodiments with each other. The scope of protection is defined solely by the appended claims.

### REFERENCE NUMERALS

- 1:: Side stanchion
- 2:: Lower stanchion portion
- 3:: Upper stanchion portion
- 4:: Lower end, Lower stanchion portion
- 5:: Upper end, Lower stanchion portion
- 6:: Lower end, Upper stanchion portion
- 7:: Upper end, Upper stanchion portion
- 8:: Fastener
- 8a:: Upper portion, Fastener
- 8b:: Lower portion, Fastener
- 9:: Roof profile
- 10:: Carriage portion
- 11:: Abutment surface
- 12:: Closing mechanism
- 13:: Locking body
- 14:: Holder portion
- 15a:: First pivot arm
- 15b:: Second pivot arm
- 16:: Wheel
- 17:: Rail
- 18:: Push rod
- 18a:: Lower end, Push rod
- 18b:: Upper end, Pressure rod
- 19:: Upper portion, Lower stanchion portion
- 20a:: First gear portion
- 20b:: Second gear portion
- 21a:: First gear segment
- 21b:: Second gear segment
- 22:: Locking pin
- 23:: Extension portion
- 23a:: Upper fork portion, Extension portion
- 23b:: Fork legs, Extension portion
- 24:: Recess
- 25:: Closing arm
- 25a:: First portion, Closing arm
- 25b:: Second portion, Closing arm
- 26:: Joint
- 26a:: Upper portion, Joint
- 26b:: Lower portion, Joint
- 27:: Lower edge, Roof profile
- 28:: Upper angled side portion, Holder portion
- 29a:: Outer portion, First pivot arm
- 29b:: Outer portion, Second pivot arm
- 30a:: Inner portion, First pivot arm
- 30b:: Inner portion, Second pivot arm
- 31:: Leaf spring
- 32a:: First rotational shaft
- 32b:: Second rotational shaft

## Claims

1. A side stanchion (1) for load platforms of vehicles comprising a lower stanchion portion (2) and an upper stanchion portion (3), wherein the lower stanchion portion (2) and the upper stanchion portion (3) have an extension in a first longitudinal direction (A) of the side stanchion (1), wherein the upper stanchion portion (3) interacts with and is movably arranged relative to the lower stanchion portion (2),
whereby the lower stanchion portion (2) at a lower end (4) is arranged to be detachably connected to a fastener (8) of the vehicle, and the upper stanchion portion (3) at an upper end (7) is arranged to be connected to a roof profile (9) of the vehicle, wherein the roof profile (9) has an extension in a second longitudinal direction (B) across the first longitudinal direction (A), wherein the upper stanchion portion (3) at the upper end (7) comprises a carriage portion (10) arranged to interact with the roof profile (9) so that the side stanchion (1) is displaceable relative to the roof profile (9) in the other longitudinal direction (B),
wherein the side stanchion (1) comprises a closing mechanism (12) arranged to connect the side stanchion (1) with the fastener (8), whereby the closing mechanism (12), during closing, attaches the side stanchion (1) to the fastener (8) and displaces the lower stanchion portion (2) relative to the upper stanchion portion (3) in the first longitudinal direction (A) from an extended position (L_{UT}) to an inserted position (L_{IN}),
wherein the carriage portion (10) comprises an abutment surface (11) arranged to interact with the roof profile (9) in the inserted position (L_{IN}), wherein the carriage portion (10) in the inserted position (L_{IN}) is pressed against the roof profile (9) in the first the longitudinal direction (A) via the lower stanchion portion (2),
wherein the side stanchion (1) comprises a locking body (13) for locking the lower stanchion portion (2) and the upper stanchion portion (3) to each other, wherein the locking body (13) is arranged to engage with the lower stanchion portion (2) and the upper stanchion portion (3) in the inserted position (L_{IN}), to prevent movement between the lower stanchion portion (2) and the upper stanchion portion (3),
**characterized in that** the carriage portion (10) comprises a holder portion (14), a first pivot arm (15a) and a second pivot arm (15b), wherein the holder portion (14) comprises the abutment surface (11) and is firmly connected to the upper stanchion portion (3), wherein the first pivot arm (15a) and the second pivot arm (15b) are pivotally connected to the holder portion (14).

2. A side stanchion (1) according to claim 1,
**characterized in that** the abutment surface (11) in the inserted position (L_{IN}) abuts against the roof profile (9) to prevent, with a clamping force, displacement of the side stanchion (1) relative to the roof profile (9) in the second longitudinal direction (B).

3. A side stanchion (1) according to claim 1 or 2,
**characterized in that** the first pivot arm (15a) and the second pivot arm (15b) are provided with wheels (16), wherein the wheels (16) are arranged to interact with a rail (17) in the roof profile (9) so that the side stanchion (1) is displaceable relative to the roof profile (9) in the second longitudinal direction (B).

4. A side stanchion (1) according to any one of the preceding claims,
**characterized in that** the side stanchion (1) further comprises a push rod (18) which is movably arranged relative to the carriage portion (10) in the first longitudinal direction (A) and arranged to interact with the first pivot arm (15a) and the second pivot arm (15b), wherein the push rod (18) in the extended position (L_{UT}) of the side stanchion (1) is in a disengaged position (L_{F}) from the first pivot arm (15a) and the second pivot arm (15b) so that the first pivot arm (15a) and the second pivot arm (15b) are freely movable relative to the holder portion (14), and wherein the push rod (18) in the inserted position (L_{IN}) of the side stanchion (1) is in an engaged position (L_{SA}) with the first pivot arm (15a) and the second pivot arm (15b) such that the first pivot arm (15a) and the second pivot arm (15b) are arranged, through the actuation of the push rod (18), in a lowered position (L_{N}) relative to the holder portion (14) where the abutment surface (11) interacts with the roof profile (9).

5. A side stanchion (1) according to claim 4,
**characterized in that** the lower stanchion portion (2) at an upper end (5) is provided with an upper portion (19) intended to interact with the push rod (18).

6. A side stanchion (1) according to claim 5,
**characterized in that** the upper portion (19) of the lower stanchion portion (2) is arranged, by means of displacement of the lower stanchion portion (2) relative to the upper stanchion portion (3) in the first longitudinal direction (A) from the extended position (L_{UT}) to the inserted position (L_{IN}), to move the push rod (18) in the first longitudinal direction (A) from the disengaged position (L_{F}) to the engaged position (L_{SA}).

7. A side stanchion (1) according to claim 5 or 6,
**characterized in that** the upper portion (19) of the lower stanchion portion (2) is arranged, by means of displacement the lower stanchion portion (2) relative to the upper stanchion portion (3) in the first longitudinal direction (A) from the inserted position (L_{IN}) to the extended position (L_{UT}), to enable the movement of the push rod (18) in the first longitudinal direction (A) from the engaged position (L_{SA}) to the disengaged position (L_{F}).

8. A side stanchion (1) according to any one of claims 4-7,
**characterized in that** the push rod (18) comprises a first gear portion (20a) and a second gear portion (20b), wherein the first pivot arm (15a) comprises a first gear segment (21a), and the second pivot arm (15b) comprises a second gear segment (21b), wherein the first gear portion (20a) is arranged to interact with the first gear segment (21a) and the second gear portion (20b) is arranged to interact with the second gear segment (21b), wherein the first pivot arm (15a) and the second pivot arm (15b), by means of displacement of the push rod (18) in the first longitudinal direction (A) when the gear portions (20a, 20b) interact with the gear segments (21a, 21b), are arranged to rotate relative to the holder portion (14).

9. A side stanchion (1) according to any one of the preceding claims,
**characterized in that** the locking body (13) comprises a locking pin (22) which is movably arranged relative to the lower stanchion portion (2) between an unlocked position (Lo) and a locked position (L_{L}), whereby the locking pin (22) in the unlocked position (Lo) is disengaged from the upper stanchion portion (3), and wherein the locking pin (22) in the locked position (L_{L}), when the side stanchion (1) is in the inserted position (L_{IN}), is engaged with the upper stanchion portion (3) to prevent movement between the lower stanchion portion (2) and the upper stanchion portion (3) in the first longitudinal direction (A).

10. A side stanchion (1) according to claim 9,
**characterized in that** during closing, the closing mechanism (12) is arranged to move the locking pin (22) from the unlocked position (Lo) to the locked position (L_{L}) when the lower stanchion portion (2) is displaced relative to the upper stanchion portion (3) in the first longitudinal direction (A) from the extended position (L_{UT}) to the inserted position (L_{IN}).

11. A side stanchion (1) according to claim 10,
**characterized in that** the upper stanchion portion (3) comprises an extension portion (23) extending in the first longitudinal direction (A) towards the closing mechanism (12), wherein the extension portion (23) is provided with a recess (24) arranged to interact with the locking pin (22) so that the locking pin (22) in the locked position (L_{L}) is in engagement with the recess (24).

## Patentansprüche

1. Seitenstütze (1) für Ladebühnen von Fahrzeugen, umfassend einen unteren Stützenabschnitt (2) und einen oberen Stützenabschnitt (3), wobei der untere Stützenabschnitt (2) und der obere Stützenabschnitt (3) eine Ausdehnung in einer ersten Längsrichtung (A) der Seitenstütze (1) aufweisen, wobei der obere Stützenabschnitt (3) mit dem unteren Stützenabschnitt (2) zusammenwirkt und relativ zu diesem beweglich angeordnet ist,
wobei der untere Stützenabschnitt (2) an einem unteren Ende (4) ausgelegt ist, um abnehmbar mit einem Befestigungselement (8) des Fahrzeugs verbunden zu werden, und der obere Stützenabschnitt (3) an einem oberen Ende (7) ausgelegt ist, um mit einem Dachprofil (9) des Fahrzeugs verbunden zu werden, wobei das Dachprofil (9) eine Ausdehnung in einer zweiten Längsrichtung (B) über die erste Längsrichtung (A) aufweist, wobei der obere Stützenabschnitt (3) am oberen Ende (7) einen Schlittenabschnitt (10) umfasst, der ausgelegt ist, um mit dem Dachprofil (9) zusammenzuwirken, so dass die Seitenstütze (1) relativ zum Dachprofil (9) in der anderen Längsrichtung (B) verschoben werden kann,
wobei die Seitenstütze (1) einen Schließmechanismus (12) umfasst, der ausgelegt ist, um die Seitenstütze (1) mit dem Befestigungselement (8) zu verbinden, wodurch der Schließmechanismus (12) während des Schließens die Seitenstütze (1) am Befestigungselement (8) anbringt und den unteren Stützenabschnitt (2) relativ zum oberen Stützenabschnitt (3) in der ersten Längsrichtung (A) von einer ausgefahrenen Position (L_{UT}) in eine eingeführte Position (L_{IN}) verschiebt,
wobei der Schlittenabschnitt (10) eine Anlagefläche (11) umfasst, die ausgelegt ist, um mit dem Dachprofil (9) in der eingeführten Position (L_{IN}) zusammenzuwirken, wobei der Schlittenabschnitt (10) in die eingeführte Position (L_{IN}) in der ersten Längsrichtung (A) über den unteren Stützenabschnitt (2) gegen das Dachprofil (9) gedrückt wird,
wobei die Seitenstütze (1) einen Verriegelungskörper (13) zum Verriegeln des unteren Stützenabschnitts (2) und des oberen Stützenabschnitts (3) miteinander umfasst, wobei der Verriegelungskörper (13) ausgelegt ist, um mit dem unteren Stützenabschnitt (2) und dem oberen Stützenabschnitt (3) in der eingeführten Position (L_{IN}) in Eingriff zu gehen, um eine Bewegung zwischen dem unteren Stützenabschnitt (2) und dem oberen Stützenabschnitt (3) zu verhindern,
**dadurch gekennzeichnet, dass** der Schlittenabschnitt (10) einen Halterabschnitt (14), einen ersten Schwenkarm (15a) und einen zweiten Schwenkarm (15b) umfasst, wobei der Halterabschnitt (14) die Anlagefläche umfasst (11) und fest mit dem oberen Stützenabschnitt (3) verbunden ist, wobei der erste Schwenkarm (15a) und der zweite Schwenkarm (15b) schwenkbar mit dem Halterabschnitt (14) verbunden sind.

2. Seitenstütze (1) nach Anspruch 1,
**dadurch gekennzeichnet, dass** die Anlagefläche (11) in der eingeführten Position (L_{IN}) am Dachprofil (9) anliegt, um mit einer Klemmkraft eine Verschiebung der Seitenstütze (1) relativ zum Dachprofil (9) in der zweiten Längsrichtung (B) zu verhindern.

3. Seitenstütze (1) nach Anspruch 1 oder 2,
**dadurch gekennzeichnet, dass** der erste Schwenkarm (15a) und der zweite Schwenkarm (15b) mit Rädern (16) versehen sind, wobei die Räder (16) ausgelegt sind, um mit einer Schiene (17) im Dachprofil (9) zusammenzuwirken, so dass die Seitenstütze (1) relativ zum Dachprofil (9) in der zweiten Längsrichtung (B) verschoben werden kann.

4. Seitenstütze (1) nach einem der vorhergehenden Ansprüche,
**dadurch gekennzeichnet, dass** die Seitenstütze (1) ferner eine Schubstange (18), die relativ zum Schlittenabschnitt (10) in der ersten Längsrichtung (A) beweglich angeordnet ist, umfasst, und die ausgelegt ist, um mit dem ersten Schwenkarm (15a) und dem zweiten Schwenkarm (15b) zusammenzuwirken, wobei sich die Schubstange (18) in der ausgefahrenen Position (L_{UT}) der Seitenstütze (1) in einer Nichteingriffs-Position (L_{F}) vom ersten Schwenkarm (15a) und dem zweiten Schwenkarm (15b) befindet, so dass der erste Schwenkarm (15a) und der zweite Schwenkarm (15b) relativ zum Halterabschnitt (14) frei beweglich sind, und wobei die Schubstange (18) in der eingeführten Position (L_{IN}) der Seitenstütze (1) in einer Eingriffsposition (L_{SA}) mit dem ersten Schwenkarm (15a) und dem zweiten Schwenkarm (15b) so ausgelegt ist, dass der erste Schwenkarm (15a) und der zweite Schwenkarm (15b) durch die Betätigung der Schubstange (18) in einer abgesenkten Position (L_{N}) relativ zum Halterabschnitt (14) angeordnet sind, wo die Anlagefläche (11) mit dem Dachprofil (9) zusammenwirkt.

5. Seitenstütze (1) nach Anspruch 4,
**dadurch gekennzeichnet, dass** der untere Stützenabschnitt (2) an einem oberen Ende (5) mit einem oberen Abschnitt (19) versehen ist, der zum Zusammenwirken mit der Schubstange (18) bestimmt ist.

6. Seitenstütze (1) nach Anspruch 5,
**dadurch gekennzeichnet, dass** der obere Abschnitt (19) des unteren Stützenabschnitts (2) ausgelegt ist, um durch Verschieben des unteren Stützenabschnitts (2) relativ zum oberen Stützenabschnitt (3) in der ersten Längsrichtung (A) aus der ausgefahrenen Position (L_{UT}) in die eingeführte Position (L_{IN} ) die Schubstange (18) in der ersten Längsrichtung (A) aus der Nichteingriffs-Position (L_{F}) in die Eingriffsposition (L_{SA}) zu bewegen.

7. Seitenstütze (1) nach Anspruch 5 oder 6,
**dadurch gekennzeichnet, dass** der obere Abschnitt (19) des unteren Stützenabschnitts (2) ausgelegt ist, um durch Verschieben des unteren Stützenabschnitts (2) relativ zum oberen Stützenabschnitt (3) in der ersten Längsrichtung (A) aus der eingeführten Position (L_{IN}) in die ausgefahrene Position (L_{UT}) die Bewegung der Schubstange (18) in der ersten Längsrichtung (A) aus der Eingriffsposition (L_{SA}) in die Nicht-Eingriffsposition (L_{F}) zu ermöglichen.

8. Seitenstütze (1) nach einem der Ansprüche 4 bis 7,
**dadurch gekennzeichnet, dass** die Schubstange (18) einen ersten Zahnradabschnitt (20a) und einen zweiten Zahnradabschnitt (20b) umfasst, wobei der erste Schwenkarm (15a) ein erstes Zahnradsegment (21a) umfasst und der zweite Schwenkarm (15b) ein zweites Zahnradsegment (21b) umfasst, wobei der erste Zahnradabschnitt (20a) ausgelegt ist, um mit dem ersten Zahnradsegment (21a) zusammenzuwirken und der zweite Zahnradabschnitt (20b) ausgelegt ist, um mit dem zweiten Zahnradsegment (21b) zusammenzuwirken, wobei der erste Schwenkarm (15a) und der zweite Schwenkarm (15b) durch Verschieben der Schubstange (18) in der ersten Längsrichtung (A), wenn die Zahnradabschnitte (20a, 20b) mit den Zahnradsegmenten (21a, 21b) zusammenwirken, ausgelegt ist, um relativ zum Halterabschnitt (14) zu rotieren.

9. Seitenstütze (1) nach einem der vorhergehenden Ansprüche,
**dadurch gekennzeichnet, dass** der Verriegelungskörper (13) einen Verriegelungsstift (22) umfasst, der relativ zum unteren Stützenabschnitt (2) zwischen einer entriegelten Position (Lo) und einer verriegelten Position (L_{L}) beweglich angeordnet ist, wodurch der Verriegelungsstift (22) in der entriegelten Position (Lo) außer Eingriff mit dem oberen Stützenabschnitt (3) ist, und wobei der Verriegelungsstift (22) in der verriegelten Position (L_{L}), wenn die Seitenstütze (1) in der eingeführten Position (L_{IN}) ist, mit dem oberen Stützenabschnitt (3) in Eingriff steht, um eine Bewegung zwischen dem unteren Stützenabschnitt (2) und dem oberen Stützenabschnitt (3) in der ersten Längsrichtung (A) zu verhindern.

10. Seitenstütze (1) nach Anspruch 9,
**dadurch gekennzeichnet, dass** während des Schließens der Schließmechanismus (12) ausgelegt ist, um den Verriegelungsstift (22) aus der entriegelten Position (Lo) in die verriegelte Position (L_{L}) zu bewegen, wenn der untere Stützenabschnitt (2) in der ersten Längsrichtung (A) relativ zum oberen Stützenabschnitt (3) aus der ausgefahrenen Position (L_{UT}) in die eingeführte Position (L_{IN}) verschoben wird.

11. Seitenstütze (1) nach Anspruch 10,
**dadurch gekennzeichnet, dass** der obere Stützenabschnitt (3) einen sich in der ersten Längsrichtung (A) zum Schließmechanismus (12) erstreckenden Verlängerungsabschnitt (23) umfasst, wobei der Verlängerungsabschnitt (23) mit einer Ausnehmung (24) versehen ist, die ausgelegt ist, um mit dem Verriegelungsstift (22) zusammenzuwirken, so dass der Verriegelungsstift (22) in der verriegelten Position (L_{L}) mit der Ausnehmung (24) in Eingriff steht.

## Revendications

1. Poteau latéral (1) pour les plates-formes de chargement de véhicules comprenant une partie de poteau inférieure (2) et une partie de poteau supérieure (3), la partie de poteau inférieure (2) et la partie de poteau supérieure (3) présentant une extension dans une première direction longitudinale (A) du poteau latéral (1), la partie de poteau supérieure (3) interagissant avec la partie de poteau inférieure (2) et est disposée de manière mobile par rapport à celle-ci, dans lequel la partie de poteau inférieure (2) à une extrémité inférieure (4) est agencée pour être reliée de manière détachable à une attache (8) du véhicule, et la partie de poteau supérieure (3) à une extrémité supérieure (7) est agencée pour être reliée à un profilé de toit (9) du véhicule, le profilé de toit (9) présentant une extension dans une deuxième direction longitudinale (B) à travers la première direction longitudinale (A), la partie de poteau supérieure (3) à l'extrémité supérieure (7) comprenant une partie de chariot (10) agencée pour interagir avec le profilé de toit (9) si bien que le poteau latéral (1) est déplaçable par rapport au profilé de toit (9) dans l'autre direction longitudinale (B),
dans lequel le poteau latéral (1) comprend un mécanisme de fermeture (12) agencé pour relier le poteau latéral (1) à l'attache (8), le mécanisme de fermeture (12), lors de la fermeture, fixant le poteau latéral (1) à l'attache (8) et déplaçant la partie de poteau inférieure (2) par rapport à la partie de poteau supérieure (3) dans la première direction longitudinale (A) à partir d'une position étendue (L_{UT}) dans une position insérée (L_{IN}),
dans lequel la partie de chariot (10) comprend une surface de butée (11) agencée pour interagir avec le profilé de toit (9) dans la position insérée (L_{IN}), la partie de chariot (10) dans la position insérée (L_{IN}) étant pressée contre le profilé de toit (9) dans la première direction longitudinale (A) via la partie de poteau inférieure (2),
dans lequel le poteau latéral (1) comprend un corps de verrouillage (13) pour verrouiller la partie de poteau inférieure (2) et la partie de poteau supérieure (3) l'une à l'autre, le corps de verrouillage (13) étant agencé pour venir en prise avec la partie de poteau inférieure (2) et la partie de poteau supérieure (3) dans la position insérée (L_{IN}), pour empêcher le mouvement entre la partie de poteau inférieure (2) et la partie de poteau supérieure (3),
**caractérisé en ce que** la partie de chariot (10) comprend une partie de support (14), un premier bras de pivot (15a) et un deuxième bras de pivot (15b), la partie de support (14) comprenant la surface de butée (11) et étant fermement raccordé à la partie de poteau supérieure (3), le premier bras de pivot (15a) et le deuxième bras de pivot (15b) étant reliés de manière pivotante à la partie de support (14).

2. Poteau latéral (1) selon la revendication 1,
**caractérisé en ce que** la surface de butée (11) dans la position insérée (L_{IN}) vient en butée contre le profilé de toit (9) pour empêcher, avec une force de serrage, le déplacement du poteau latéral (1) par rapport au profilé de toit (9) dans la deuxième direction longitudinale (B).

3. Poteau latéral (1) selon la revendication 1 ou 2,
**caractérisé en ce que** le premier bras de pivot (15a) et le deuxième bras de pivot (15b) sont pourvus de roues (16), les roues (16) étant agencées pour interagir avec un rail (17) dans le profilé de toit (9) de sorte que le poteau latéral (1) puisse être déplacé par rapport au profilé de toit (9) dans la deuxième direction longitudinale (B).

4. Poteau latéral (1) selon l'une quelconque des revendications précédentes,
**caractérisé en ce que** le poteau latéral (1) comprend en outre une tige de poussée (18) qui est arrangée de manière mobile par rapport à la partie de chariot (10) dans la première direction longitudinale (A) et agencée pour interagir avec le premier bras de pivot (15a) et le deuxième bras de pivot (15b), dans lequel la tige de poussée (18) dans la position étendue (L_{UT}) du poteau latéral (1) est dans une position débrayée (L_{F}) du premier bras de pivot (15a) et du deuxième bras de pivot (15b) de sorte que le premier bras de pivot (15a) et le deuxième bras de pivot (15b) soient librement mobiles par rapport à la partie de support (14), et dans lequel la tige de poussée (18) dans la position insérée (L_{IN}) du poteau latéral (1) est dans une position engagée (L_{SA}) avec le premier bras de pivot (15a) et le deuxième bras de pivot (15b) si bien que le premier bras de pivot (15a) et le deuxième bras pivotant (15b) sont disposés, par l'actionnement de la tige de poussée (18), dans une position abaissée (L_{N}) par rapport à la partie de support (14), la surface de butée (11) interagissant avec le profilé de toit (9).

5. Poteau latéral (1) selon la revendication 4,
**caractérisé en ce que** la partie de poteau inférieure (2) à une extrémité supérieure (5) est pourvue d'une portion supérieure (19) destinée à coopérer avec la tige de poussée (18).

6. Poteau latéral (1) selon la revendication 5,
**caractérisé en ce que** la partie supérieure (19) de la partie inférieure de poteau (2) est agencée, au moyen du déplacement de la partie de poteau inférieure (2) par rapport à la partie de poteau supérieure (3) dans la première direction longitudinale (A) de la position étendue (L_{UT}) à la position insérée (L_{IN}), pour déplacer la tige de poussée (18) dans la première direction longitudinale (A) de la position débrayée (L_{F}) vers la position engagée (L_{SA}).

7. Poteau latéral (1) selon la revendication 5 ou 6,
**caractérisé en ce que** la partie supérieure (19) de la partie de poteau inférieure (2) est agencée, au moyen du déplacement de la partie de poteau inférieure (2) par rapport à la partie de poteau supérieure (3) dans la première direction longitudinale (A) à partir de la position insérée (L_{IN}) à la position étendue (L_{UT}), pour permettre le déplacement de la tige de poussée (18) dans la première direction longitudinale (A) à partir de la position engagée (L_{SA}) vers la position débrayée (L_{F}).

8. Poteau latéral (1) selon l'une quelconque des revendications 4 à 7,
**caractérisé en ce que** la tige de poussée (18) comprend une première partie d'engrenage (20a) et une deuxième partie d'engrenage (20b), dans lequel le premier bras de pivot (15a) comprend un premier segment d'engrenage (21a), et le deuxième bras de pivot (15b) comprend un deuxième segment d'engrenage (21b), dans lequel la première partie d'engrenage (20a) est agencée pour interagir avec le premier segment d'engrenage (21a), et la deuxième partie d'engrenage (20b) est agencée pour interagir avec le deuxième segment d'engrenage (21b), dans lequel le premier bras de pivot (15a) et le deuxième bras de pivot (15b), au moyen du déplacement de la tige de poussée (18) dans la première direction longitudinale (A) lorsque les parties d'engrenage (20a, 20b) interagissent avec les segments d'engrenage (21a, 21b), sont agencés pour tourner par rapport à la partie de support (14).

9. Poteau latéral (1) selon l'une quelconque des revendications précédentes,
**caractérisé en ce que** le corps de verrouillage (13) comprend une goupille de verrouillage (22) qui est arrangée de manière mobile par rapport à la partie de poteau inférieure (2) entre une position déverrouillée (Lo) et une position verrouillée (L_{L}), la goupille de verrouillage (22) dans la position déverrouillée (Lo) étant désengagée de la partie de poteau supérieure (3), et dans lequel la goupille de verrouillage (22) dans la position verrouillée (L_{L}), lorsque le poteau latéral (1) est dans la position insérée (L_{IN}), est en prise avec la partie de poteau supérieure (3) pour empêcher le mouvement entre la partie de poteau inférieure (2) et la partie de poteau supérieure (3) dans la première direction longitudinale (A).

10. Poteau latéral (1) selon la revendication 9,
**caractérisé en ce que** lors de la fermeture, le mécanisme de fermeture (12) est agencé pour déplacer la goupille de verrouillage (22) de la position déverrouillée (Lo) à la position verrouillée (L_{L}) lorsque la partie de poteau inférieure (2) est déplacée par rapport à la partie de poteau supérieure (3) dans la première direction longitudinale (A) de la position étendue (L_{UT}) à la position insérée (L_{IN}).

11. Poteau latéral (1) selon la revendication 10,
**caractérisé en ce que** la partie supérieure de poteau (3) comprend une partie d'extension (23) s'étendant dans la première direction longitudinale (A) vers le mécanisme de fermeture (12), dans lequel la partie d'extension (23) est pourvue d'un évidement (24) agencé pour interagir avec la goupille de verrouillage (22) si bien que la goupille de verrouillage (22) dans la position verrouillée (L_{L}) est en prise avec l'évidement (24).
